# EUROPÄISCHE PATENTANMELDUNG

(11) **EP 0 604 373 A1**
(43) Veröffentlichungstag der Anmeldung: **29.06.1994**
(21) Anmeldenummer: 93810897.4
(22) Anmeldetag: 21.12.1993
(51) Int. Cl.: G01S 17/46

(54) **Reflexionslichttaster**

(30) Priorität: 23.12.1992 CH 3929/92
(71) Anmelder: ELESTA AG ELEKTRONIK, CH-7310 Bad Ragaz (CH)
(72) Erfinder: Manner, Joachim, Dipl.-Ing. (FH), Ch-7310 Bad Ragaz (CH); Kirchner, Martin, Dipl.Ing. (FH), CH-7310 Bad Ragaz (CH); Hälg, Beat, Dr.sc.nat., CH 7323 Wangs (CH)
(74) Vertreter: Riederer, Conrad A., Dr.

(57) **Zusammenfassung**

Ein Reflexionslichttaster basierend auf dem Triangulationsmessverfahren und mit einer geregelter Lichtquelle wird erfindungsgemäss mit einer Unterbrechereinheit ausgestattet, welche die Messignalleitung unterbricht, solange der Regelkreis zur Steuerung der Lichtintensität noch nicht eingeschwungen ist. Der Stellwert des Reglers wird in einer Auswerteeinheit zur Gewinnung von Informationen über den Betriebszustand des Reflexionslichttasters genutzt.

## Beschreibung

Die vorliegende Erfindung betrifft einen Reflexionslichttaster basierend auf dem Triangulationsmessverfahren.

Gemäss heutigem Stand der Technik sind Reflexionslichttaster basierend auf dem Triangulationsmessverfahren bekannt, bei welchen die von einem positionsempfindlichen, photoelektrischen Element, z.B. positionsempfindliche Diode (PSD), herrührenden Photoströme zur Berechnung des Objektabstandes verwendet werden. Die Unterdrückung des Fremdlichtes (z.B. des Tageslichtes) geschieht üblicherweise mit Hilfe einer gepulsten Lichtquelle und anschliessender Demodulation der Photoströme.

Das Messprinzip eines derartigen Reflexionslichttasters ist folgendermassen: Der auf einer positionsempfindlichen Diode auftreffende Lichtstrahl erzeugt zwei vom Auftreffpunkt des Lichtes abhängige Ströme. Der an einem Anodenanschluss abfliessende Strom ist umgekehrt proportional zum Abstand des Lichtpunktes zu diesem Anodenanschluss. Aus der Differenz oder dem Verhältnis der an den beiden Anodenanschlüssen abfliessenden Anodenströme kann sodann der Objektabstand berechnet werden, indem z.B. die Differenz der Anodenströme durch die Summe der abfliessenden Anodenströme dividiert wird. Dies kann mit Hilfe einer Dividiererschaltung geschehen. Nachteilig bei dieser Schaltung ist, dass diese aufwendig und teuer ist und nur einen geringen Dynamikbereich aufweist. Dazu kommt, dass der Fehler der Abstandsmessung bei schwach reflektierenden Objekten gross wird, d.h. wenn der Nenner gegen null geht.

Bei einer anderen Ausführung eines solchen im Handel erhältlichen Reflexionslichttasters wird die Strahlungsintensität der Lichtquelle derart geregelt, dass die Summe der an den Anodenanschlüssen abfliessenden Ströme konstant ist. Durch diese Regelung vereinfacht sich die Auswertung: Der Objektabstand kann aus der Differenz der Anodenströme berechnet werden. Zwecks einer einfachen Auswertung bezieht man sich nur auf einen der beiden Anodenströme, denn die beiden Anodenströme stehen ja umgekehrt proportional zueinander. Bei dieser Art der Regelung wird im Normalbetriebszustand, d.h. wenn kein Objekt im Tastbereich vorhanden ist, die Lichtquelle bei maximaler Intensität betrieben. Erscheint nun ein Objekt im Tastbereich, so muss die Strahlungsintensität der Lichtquelle soweit reduziert werden, dass die Bedingung für eine korrekte Messung - Summe der Anodenströme = konstant - raschestmöglichst erfüllt wird. Diese Auswerteschaltung hat den Nachteil, dass es, besonders bei schnell bewegten Objekten, d.h. wenn die Frequenz des Objektes ungefähr um weniger als einen Faktor 1000 kleiner ist als die Pulsfrequenz der Lichtquelle (z.B. Pulsfrequenz 10 kHz, Objekt grösser/gleich 10 Hz), zu Fehlmessungen resp. Fehlschaltungen kommen oder dass das Objekt nicht mehr erkannt werden kann. Ursache dieser Fehlmessungen ist die Einschwingzeit des Regelkreises, während welcher eine falsche Abstandsinformation vorliegen kann. Diese Probleme treten umso stärker auf, je schneller sich das Objekt bewegt. Eine zuverlässige Objekterfassung ist besonders wichtig, wenn der Reflexionslichttaster in einem vollautomatisch ablaufenden Prozess zum Einsatz kommt und die Ausgabe der Messwerte an einem binären Ausgang erfolgt, welcher anzeigt, ob ein Objekt in einem festgelegten Abstandsbereich vorhanden ist oder nicht. Schaltet der binäre Ausgang, so setzt der nächste Arbeitsschritt ein. Ist die anliegende Information jedoch falsch, so kann ein Prozessunterbruch die Folge sein.

In der EP-A-0 328 136 wird ein auf demselben Messprinzip basierender Distanzmessapparat mit einer gepulsten Lichtquelle beschrieben, bei welchem, im Gegensatz zum vorerwähnten Reflexionslichttaster, die Intensität jedes einzelnen Lichtpulses rampenförmig erhöht wird, bis diese einen bestimmten vorgegebenen Schwellwert erreicht, was durch einen Komparator festgestellt wird. Beim Erreichen des Schwellwertes liefert der Komparator ein Signal an die Treibermittel für die Lichtquelle, wodurch die Lichtemission gestoppt wird. Im selben Augenblick wird der Empfänger, d.h. das positionsempfindliche Element, abgetastet. Dieses Signal entspricht der Position des Objektes. Der beschriebene Distanzmessapparat hat den Vorteil, dass keine Regelung der Lichtintensität nötig ist, sodass sich auch das Problem der Erfassung von falschen Messwerten bei schnell bewegten Objekten weniger ausgeprägt stellt als bei einem Reflexionslichttaster mit geregelter Lichtintensität. Allerdings ist nachteilig, dass die Lösung gemäss EP-A-0 328 136 relativ aufwendig und teuer ist. Ein weiterer Nachteil ist, dass keine Auswertung bezüglich der Zuverlässigkeit der Messwerte oder bezüglich der Verschmutzung der Lichtquelle vorgesehen ist.

Im industriellen Einsatz sind die Reflexionslichttaster oftmals einer schmutzigen Atmosphäre ausgesetzt. Die Folge davon ist eine langsam fortschreitende Verschmutzung der Sensoroptik. Die Lichtintensität nimmt ab, der Sensor wird unempfindlicher und fällt unter Umständen ganz aus. Es wäre deshalb vorteilhaft, wenn die Verschmutzung beziehungsweise der Betriebszustand des Tasters angezeigt werden könnte, damit dieser rechtzeitig gereinigt oder ersetzt werden kann.

Es ist Aufgabe der vorliegenden Erfindung, die vorgenannten Nachteile mindestens teilweise zu vermeiden und einen kostengünstigen und zuverlässigen Reflexionslichttaster basierend auf dem Triangulationsmessverfahren zur Verfügung zu stellen, der zur Messung von schnell bewegten Objekten eingesetzt werden kann, deren Frequenz im Bereich von 10 bis 100-mal kleiner sein kann als die Pulsfrequenz der Lichtquelle. Ferner ist es erwünscht, dass der Reflexionslichttaster den Betriebszustand des Reflexionslichttasters und die Gültigkeit der gemessenen Abstandswerte angibt.

Gemäss der Erfindung ist ein Reflexionslichttaster der eingangs erwähnten Gattung dadurch gekennzeichnet, dass zur Unterdrückung von Fehlmessungen während des Einschwingvorganges eine Unterbrechereinheit vorgesehen ist, welche durch Verfolgen oder Vergleichen wenigstens eines Signals des Regelkreises den Einschwingzustand desselben überprüft und gegebenenfalls die Signalweiterleitung oder Signalausgabe unterbricht. Durch diese Anordnung können auf einfache Art und Weise falsche Messwerte unterdrückt werden, sodass sich das Einsatzgebiet von Reflexionslichttastern der eingangs erwähnten Art ganz wesentlich erweitert. So kann mit diesem Reflexionslichttaster die Erfassung von Objekten erfolgen, deren Frequenz bis zu einem Faktor von ungefähr 10 bis 100 kleiner als die Frequenz der gepulsten Lichtquelle ist. Der erfindungsgemässe Reflexionslichttaster eignet sich daher besonders zum Einsatz in vollautomatisch ablaufenden Prozessen, wo die bisher oft durch die eingangs beschriebenen Fehlmessungen verursachten Prozessunterbrüche vermieden werden können. Die Unterbrechereinheit kann in Reflexionslichttastern eingesetzt werden, welche Dividiererschaltungen aufweisen oder bei welchen die Auswertung nur anhand eines Anodenstromes erfolgt (Summe der empfangenen Lichtintensität wird konstant gehalten).

Vorteilhaft kann die Unterbrechereinheit einen Schalter und einen Steuerteil umfassen. Dies ist eine besonders einfache und kostengünstige Ausführungsart und kann je nach Einsatzgebiet des Reflexionslichttasters unterschiedlich konzipiert sein. Bei einer vorteilhaften Ausführungsart kann der Steuerteil aus einer Komparatorschaltung bestehen, welche einen Eingang für das Ausgangssignal des Summierers, einen Eingang für den Sollwert des Reglers und einen Ausgang zur Betätigung des Schalters umfasst. Der Schalter kann die Uebertragung des Messignals an die zentrale Steuereinheit oder die Anzeige des Messignals unterbrechen, wenn ein bestimmter Schwellwert überschritten wird. Diese Anordnung ist effizient und sehr zuverlässig.

Eine andere zweckmässige Ausführungsart der Unterbrechereinheit lässt sich realisieren, wenn der Steuerteil eine Differenziererschaltung umfasst, welche einen Eingang für den Ist- oder Stellwert des Reglers und ein nachgeschaltetes Zeitglied zur Betätigung des Schalters umfasst. Der Schalter kann die Uebertragung des Messignals an die zentrale Steuereinheit oder die Anzeige des Messignals unterbrechen, solange die Aenderung des Ist- oder Stellwertes pro Zeiteinheit grösser als ein vorgegebener Wert ist. Ueber das Zeitglied wird - einmal getriggert - die Unterbrechungszeit eingestellt. Als Zeitglied eignet sich z.B. ein Monoflop.

Die Unterbrechereinheit kann auch als intelligente Logik ausgeführt sein, die z.B. den Einschwingzustand des Reglers überprüft und diese Information in der zentralen Steuereinheit verarbeitet.

Die Unterbrechung der Messwertübertragung kann vorzugsweise durch einen Feldeffekttransistor erfolgen. Es sind aber auch andere Schaltungen resp. Bauelemente denkbar, welche den gleichen Zweck erfüllen können wie die vorbeschriebenen Schaltungen.

Vorteilhaft kann eine Auswerteschaltung vorgesehen werden. Die Auswerteschaltung hat den Zweck, dem Anwender zusätzliche, nützliche Informationen über den Betriebszustand des Reflexionslichttasters zur Verfügung zu stellen. Um die Gültigkeit der Messwerte anzuzeigen, kann zweckmässigerweise eine Verbindung zwischen der Unterbrechereinheit und der Auswerteschaltung zur Uebertragung des Ausgangssignals des Steuerteils vorgesehen werden. Das Ausgangssignal des Steuerteils liefert die Information, ob der Regelkreis bereits eingeschwungen ist, d.h. ob die Messwerte gültig sind. Diese bei der Realisierung der vorliegenden Erfindung bereits vorhandene Information kann also vorteilhaft genutzt werden.

Vorteilhaft wird auch eine Verbindung zwischen dem Regler und der Auswerteschaltung zur Uebertragung des Stellwertes vorgesehen, um die Lichtreserve anzuzeigen. Unter der Lichtreserve versteht man den Faktor zwischen dem aktuellen Stellwert und dem maximalen Stellwert des Reglers. Falls der Istwert am Regler den Sollwert erreicht und der Stellwert 100 Prozent beträgt (max. Lichtintensität), reflektiert das Objekt gerade noch genügend Licht auf den Empfäger, um den Abstand richtig zu erkennen. Je kleiner der Stellwert ist, umso mehr Licht wird vom Objekt reflektiert und der Sensor hat eine gewisse Lichtreserve zur Verfügung. Bei einer schmutzigen Atmosphäre oder einer Verschmutzung der Optik des Reflexionslichttasters nimmt die Lichtreserve ab. Diese Information über die Lichtreserve kann vorteilhaft zur Anzeige der Verschmutzung der Optik oder der Atmosphäre verwendet werden.

Die vorliegenden Informationen über die Gültigkeit der Messwerte und die Lichtreserve können darüberhinaus aber vorteilhaft miteinander oder mit dem Abstandswert logisch verknüpft werden. Die Verknüpfung der Gültigkeitsanzeige mit dem Abstandswert liefert die Information, dass ein Objekt in einem bestimmten Abstandsbereich zuverlässig detektiert worden ist. Die Gültigkeitsanzeige mit der Lichtreserve verknüpft liefert die Information, dass ein Objekt in einem bestimmten Abstandsbereich mit x-Prozent Lichtreserve erfasst wurde, d.h. eine Abnahme der Lichtreserve zeigt die zunehmende Verschmutzung des Sensors an.

Es ist auch möglich, die Verknüpfung der verschiedenen Informationen in der zentralen Steuereinheit zu machen, sodass z.B. das Messignal erst unmittelbar vor dem Ausgang der zentralen Steuereinheit unterbrochen wird.

Ebenso kann die Berechnung und Anzeige der Gültigkeit und der Lichtreserve in der zentralen Steuereinheit erfolgen.

Nachfolgend werden das bekannte Triangulationsmessverfahren und ein bekannter Reflexionslichttaster, sowie Ausführungsbeispiele des erfinderischen Reflexionslichttasters unter Bezugnahme auf die Zeichnungen beschrieben. Es zeigt:
- Fig.1: Messprinzip des Triangulationsmessverfahrens,
- Fig.2: Blockschema eines bekannten Reflexionslichttasters basierend auf dem Triangulationsmessverfahren und mit geregelter Lichtquelle,
- Fig.3: eine beispielhafte Ausführungsform des erfindungsgemässen Reflexionslichttasters mit einer Unterbrechereinheit,
- Fig.4: a) Steuerteil umfassend einen Komparator und einen Schalter,
b) Steuerteil umfassend einen Differenzierer, ein Zeitglied und einen Schalter,
- Fig.5: Reflexionslichttaster mit Auswerteschaltung.

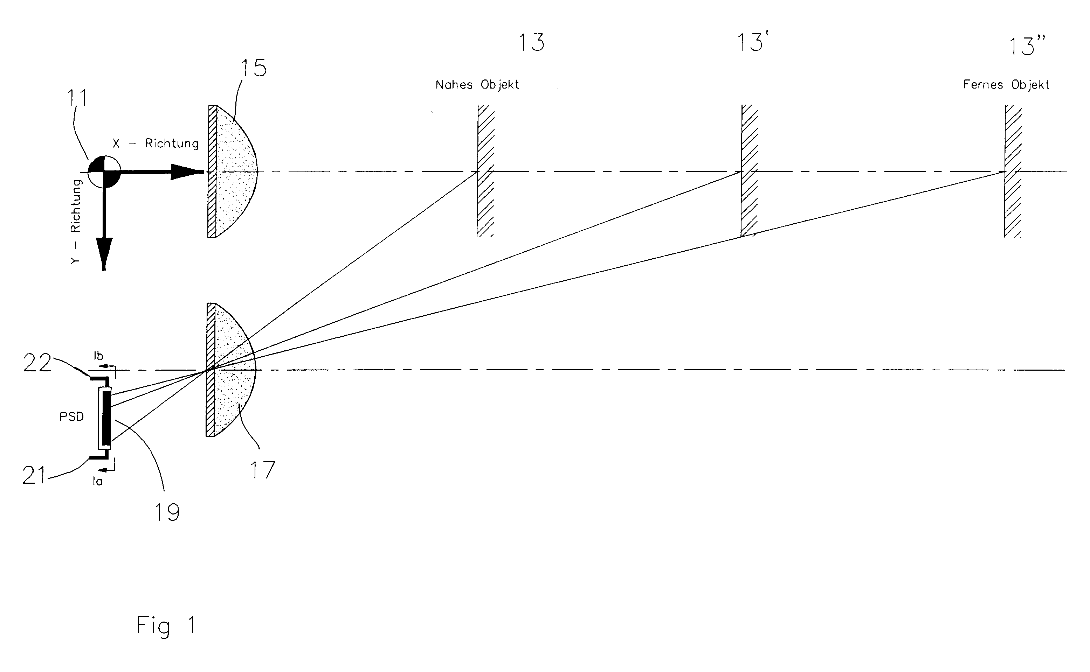

Fig. 1 veranschaulicht das Prinzip des Triangulationsmessverfahrens. Eine Lichtquelle 11 emittiert Licht, welches von einer Linse 15 fokussiert und von einem Objekt 13 oder 13',13'' reflektiert wird. Das reflektierte Licht wird durch eine Linse 17 auf eine positionsempfindliche, photoelektrische Diode 19 fokussiert und erzeugt die Ströme Ia und Ib, welche an den Anodenanschlüssen 21,22 abfliessen. Aus den gemessen Strömen kann der Objektabstand berechnet werden.

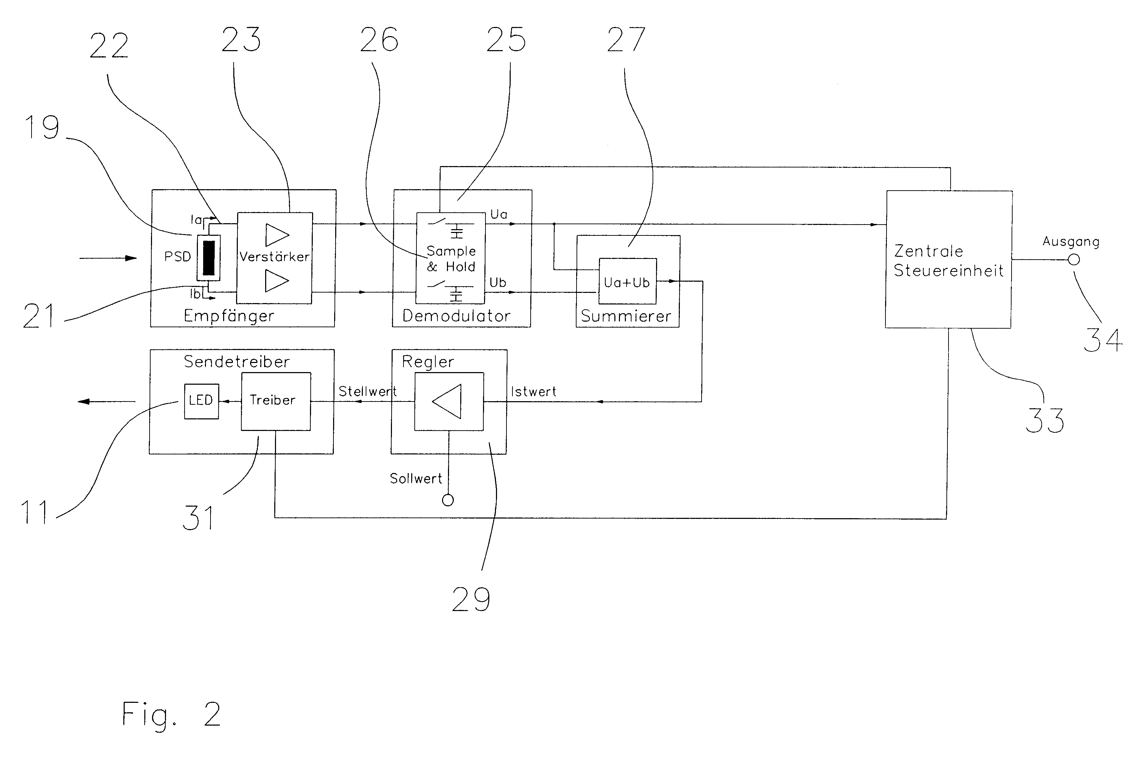

Fig. 2 zeigt das Blockschema eines bekannten Reflexionslichttasters basierend auf dem Triangulationsmessverfahren und mit einer geregelten Lichtquelle. Die Anodenströme Ia und Ib werden einem Verstärker 23 und anschliessend einem Demodulator 25 zugeführt, welcher zwei Messignale Ua und Ub erzeugt. Eine Sample and Hold-Schaltung 26 sorgt dafür, dass der jeweils letzte Messwert solange am Ausgang des Demodulators 25 anliegt bis der nächste Messwert verfügbar ist. Eines der beiden Messignale Ua wird an die zentrale Steuer- und Auswerteeinheit 33 zur Berechnung des Objektabstandes weitergeleitet. Die Messignale Ua und Ub werden andererseits in einem Summierer 27 addiert und dem Regler 29 als Istwert zur Verfügung gestellt. Der Regler 29 generiert aufgrund eines Vergleiches von Ist- und Sollwert den Stellwert für den Treiber 31 der Lichtquelle 11.

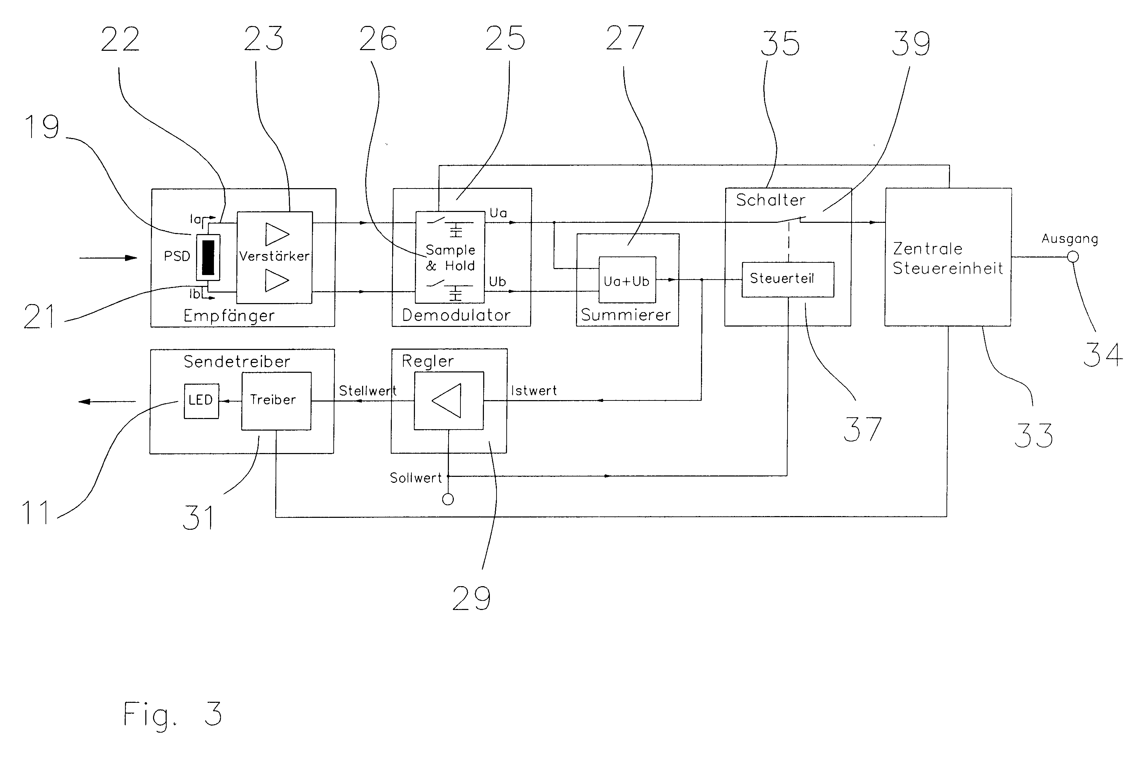

Fig. 3 hingegen zeigt das Blockschema des erfindungsgemässen Reflexionslichttasters, welcher zusätzlich eine Unterbrechereinheit 35 aufweist. Die Unterbrechereinheit 35 kann das Messignal Ua unterbrechen, d.h. dessen Uebergabe an die zentrale Steuer- und Auswerteeinheit 33 oder dessen Ausgabe am oder vor dem Ausgang 34 verhindern. Die Unterbrechereinheit 35 umfasst einen Schalter 39 und einen Steuerteil 37, welcher den Schalter 39 ansteuert.

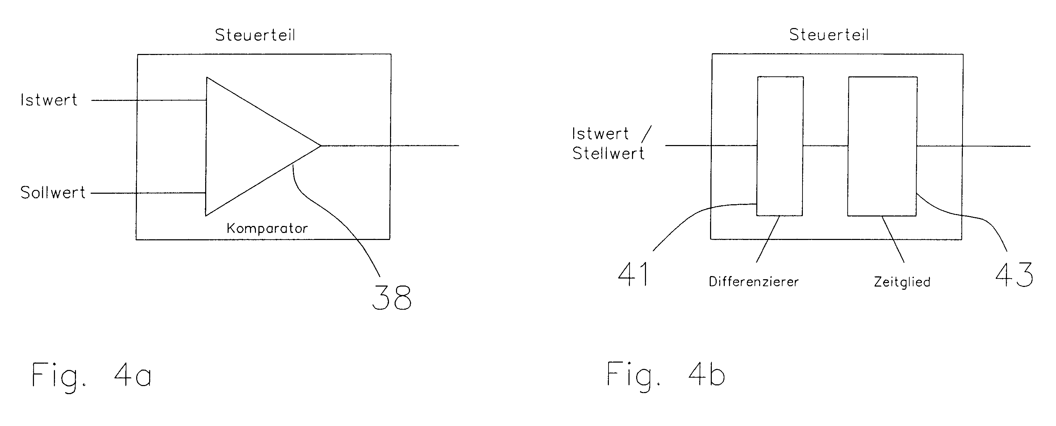

Gemäss Fig. 4 a) umfasst der Steuerteil 37 einen Komparator 38. Am Komparator 38 liegen das Ausgangssignal des Summierers 27 und der Sollwert des Reglers 29 an. Solange der Istwert den Sollwert übersteigt, bleibt der Schalter 39 geöffnet und die Messignalleitung unterbrochen.

Fig. 4 b) zeigt einen Steuerteil 37 mit einem Differenzierer 41 und einem nachgeschalteten Zeitglied 43, welches den Schalter 39 betätigt. Am Eingang des Differenzierers 41 wird entweder das Ausgangssignal des Summierers 27 (Istwert) oder der Stellwert des Reglers 29 angelegt.

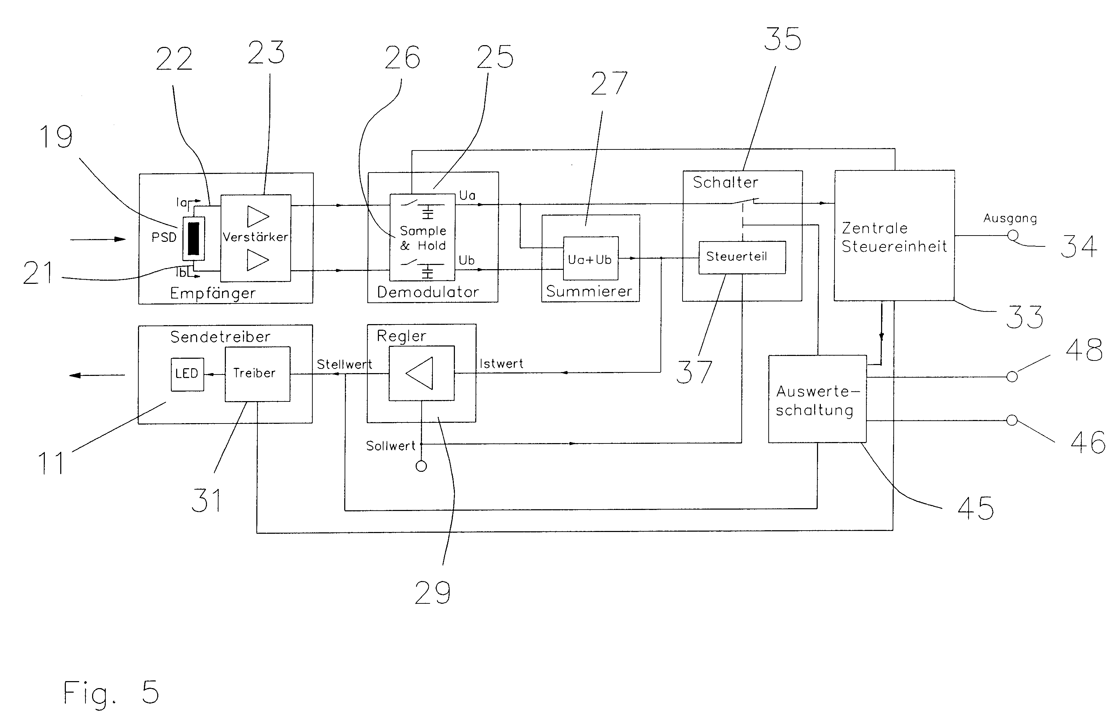

In Fig. 5 ist das Blockschema eines Reflexionslichttasters mit einer Auswerteschaltung 45 dargestellt. Der Auswerteschaltung 45 werden das Ausgangsignal des Steuerteils 37 und der Stellwert des Reglers 29 zugeführt, um die Gültigkeit der Messwerte und die verfügbare Lichtreserve anzuzeigen. Durch logisches Verknüpfen der vorhandenen Informationen, z.B. der Gültigkeitsanzeige des Steuerteils 37 mit dem Stellwert des Reglers 29 resp. mit dem berechneten Abstandswert der zentralen Steuereinheit 33 lassen sich weitere Aussagen machen.

Der erfindungsgemässe Reflexionslichttaster gemäss Fig. 5 arbeitet folgendermassen: Der auf einer positionsempfindlichen Diode 19 auftreffende Lichtpuls erzeugt einen Strom Ia,Ib der an den beiden Anodenanschlüssen abfliesst. Die Grösse der beiden Ströme Ia,Ib ist dabei umgekehrt proportional zum Abstand des auftreffenden Lichtpunktes zu den beiden Anodenanschlüssen. Die Ströme Ia und Ib beaufschlagen, nachdem sie durch geeignete Verstärkermittel verstärkt worden sind, den Demodulator 25, welcher die Signale Ua und Ub erzeugt. Eine Sample and Hold-Schaltung 26 sorgt dafür, dass der jeweils letzte Messwert solange am Ausgang des Demodulators 25 anliegt bis der nächste Messwert verfügbar ist. Eines der beiden Signale Ua wird über die Unterbrechereinheit 35 an die zentrale Steuereinheit 33 zur Berechnung des Objektabstandes weitergeleitet. Gleichzeitig werden die Signale Ua und Ub im Summierer 27 summiert und als Istwert dem Regler 29 zugeführt. Der Regler 29 berechnet durch Vergleich des Ist- und des Sollwertes den Stellwert für den Treiber 31 der Lichtquelle 11.

Der Istwert des Summierers 27 und der Sollwert des Reglers 29 bilden die Eingangssignale des Steuerteils 37, welcher die Messignalleitung zur zentralen Steuereinheit 33 mittels des Schalters 39 unterbricht, solange das Kriterium - Istwert = Sollwert - nicht erfüllt ist. Bei einer anderen zweckmässigen Ausführungsart des Reflexionslichttasters wird die Signalweiterleitung oder die Anzeige des Signals unterbrochen, solange die Aenderung des Istwertes oder Stellwertes des Reglers pro Zeiteinheit kleiner als ein vorgegebener Wert ist.

Die Auswerteschaltung 45 besitzt Eingänge zur Aufnahme des Ausgangssignals des Steuerteils 37, des Stellwertes des Reglers 29 und des Abstandswertes der zentralen Steuereinheit 33. Sie berechnet die verfügbare Lichtreserve. Die Auswerteschaltung 45 zeigt die Lichtreserve und die Gültigkeit der Messwerte an und/oder gibt diese an den Ausgängen 46,48 aus.

## Patentansprüche

1. Reflexionslichttaster basierend auf dem Triangulationsmessverfahren, umfassend eine Lichtquelle (11) mit einem Treiber (31) und einem Regler (29) für die Lichtquelle, wobei der Regler (29) je einen Eingang für einen Ist- und einen Sollwert und einen Ausgang für einen Stellwert aufweist, ein positionsempfindliches Empfangselement (19), welches wenigstens zwei dem Lichtauftreffpunkt entsprechende Ströme erzeugt, nachgeschaltete Verstärker- (23) und Filtermittel (25) zur Verarbeitung der Ströme in an und für sich bekannter Weise, einen Summierer (27), welcher die von den Verstärker- (23) und Filtermitteln (25) erzeugten Signale summiert und dem Regler (29) als Istwert zur Verfügung stellt, damit die vom Empfangselement (19) empfangene Lichtintensität durch einen Regelkreis (29,31,11,19,23,25,27) konstant gehalten werden kann, sowie eine zentrale den Treiber (31) und den Demodulator (25) verbindende Steuereinheit (33) mit einem Eingang für wenigstens eines der Signale der Verstärker- (23) und Filtermittel (25) und mindestens einem Ausgang (34) zur Anzeige des Objektabstandes oder eines Schwellwertes, dadurch gekennzeichnet, dass zur Unterdrückung von Fehlmessungen während des Einschwingvorganges eine Unterbrechereinheit (35) vorgesehen ist, welche durch Verfolgen oder Vergleichen wenigstens eines Signals des Regelkreises (29,31,11,19,23,25,27) den Einschwingzustand desselben überprüft und gegebenenfalls die Signalweiterleitung oder Signalausgabe unterbricht.

2. Reflexionslichttaster nach Anspruch 1, dadurch gekennzeichnet, dass die Unterbrechereinheit (35) einen Schalter (39) und einen Steuerteil (37) umfasst.

3. Reflexionslichttaster nach Anspruch 2, dadurch gekennzeichnet, dass der Steuerteil eine Komparatorschaltung (38) umfasst, welche einen Eingang für das Ausgangssignal des Summierers (27), einen Eingang für den Sollwert des Reglers (29) und einen Ausgang zur Betätigung des Schalters (39) umfasst, welcher die Uebertragung des Messignals an die zentrale Steuereinheit (33) oder dessen Ausgabe unterbricht, wenn ein bestimmter Schwellwert überschritten wird.

4. Reflexionslichttaster nach Anspruch 2, dadurch gekennzeichnet, dass der Steuerteil (37) eine Differenziererschaltung (41) umfasst, welche einen Eingang für den Ist- oder Stellwert des Reglers (29) und ein nachgeschaltetes Zeitglied (43) zur Betätigung des Schalters (39) umfasst, welcher die Uebertragung des Messignals an die zentrale Steuereinheit (33) oder dessen Ausgabe unterbricht, solange die Aenderung des Ist- oder Stellwertes pro Zeiteinheit grösser als ein vorgegebener Wert ist.

5. Reflexionslichttaster nach Anspruch 3 oder 4, dadurch gekennzeichnet, dass der Schalter (39) ein Feldeffekttransistor ist.

6. Reflexionslichttaster nach einem der Ansprüche 1 bis 5, dadurch gekennzeichnet, dass eine Auswerteschaltung (45) mit mindestens einem Ausgang (46) vorgesehen ist.

7. Reflexionslichttaster nach Anspruch 6 dadurch gekennzeichnet, dass eine Verbindung zwischen der Unterbrechereinheit (35) und der Auswerteschaltung (45) zur Uebertragung des Ausgangssignals des Steuerteils (37) vorgesehen ist, um die Gültigkeit der Messwerte anzuzeigen.

8. Reflexionslichttaster nach Anspruch 6 oder 7 dadurch gekennzeichnet, dass eine Verbindung zwischen dem Regler (29) und der Auswerteschaltung (45) zur Uebertragung des Stellwertes vorgesehen ist, um die Lichtreserve anzuzeigen.

9. Reflexionslichttaster nach einem der Ansprüche 6 bis 8, dadurch gekennzeichnet, dass eine Verbindung zwischen der zentralen Steuereinheit (33) und der Auswerteschaltung (45) zur Uebertragung der Abstandsinformation vorgesehen ist.

10. Reflexionslichttaster nach einem der Ansprüche 6 bis 9, dadurch gekennzeichnet, dass die Auswerteschaltung (45) ein Teil der zentralen Steuereinheit (33) ist.

11. Reflexionslichttaster basierend auf dem Triangulationsmessverfahren, umfassend eine Lichtquelle (11) mit einem Treiber (31) und einem Regler (29) für die Lichtquelle, wobei der Regler (29) je einen Eingang für einen Ist- und einen Sollwert und einen Ausgang für einen Stellwert aufweist, ein positionsempfindliches Empfangselement (19), welches wenigstens zwei dem Lichtauftreffpunkt entsprechende Ströme erzeugt, nachgeschaltete Verstärker- (23) und Filtermittel (25) zur Verarbeitung der Ströme in an und für sich bekannter Weise, einen Summierer (27), welcher die von den Verstärker- (23) und Filtermitteln (25) erzeugten Signale summiert und dem Regler (29) als Istwert zur Verfügung stellt, damit die vom Empfangselement (19) empfangene Lichtintensität konstant ist, sowie eine zentrale den Treiber (31) und den Demodulator (25) verbindende Steuereinheit (33) mit einem Eingang für wenigstens eines der Signale und mindestens einem Ausgang (34) zur Anzeige des Objektabstandes oder eines Schwellwertes, dadurch gekennzeichnet, dass eine Auswerteschaltung (45) gemäss einem der Ansprüche 6 bis 10 vorgesehen ist.
